# EUROPÄISCHE PATENTANMELDUNG

(11) **EP 4 660 845 A1**
(43) Veröffentlichungstag der Anmeldung: **10.12.2025**
(21) Anmeldenummer: 25176878.4
(22) Anmeldetag: 16.05.2025
(51) Int. Cl.: G06F 16/908, G06F 16/93, G06Q 10/10

(54) **VERFAHREN UND SYSTEM ZUM ERMITTELN EINES AUSGABEWERTES ZUR DATENVERARBEITUNG IN EINER DATENBANK**

(30) Priorität: 03.06.2024 DE 102024115390
(71) Anmelder: FORBENCAP GmbH, 87527 Sonthofen (DE)
(72) Erfinder: Götz, Prof. Dr. Stefan, 85659 Forstern (DE)
(74) Vertreter: advotec.

(57) **Zusammenfassung**

Ein computerimplementiertes Verfahren zum Ermitteln mindestens eines Ausgabewertes zur Datenverarbeitung in einer Datenbank, aufweisend die Schritte:
- Ermitteln (S1) mindestens eines numerischen und/oder textlogikbezogenen Basiswertes aus einer Text- und/oder Bilddatei;
- Ermitteln (S2) einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln (S3) des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen (S4) des mindestens einen Ausgabewertes zur Datenverarbeitung in der Datenbank.

## Beschreibung

Die Erfindung betrifft ein computerimplementiertes Verfahren und ein System zum Ermitteln mindestens eines Ausgabewertes zur Datenverarbeitung in einer Datenbank.

### Stand der Technik

In Anwaltskanzleien spielt die korrekte Berechnung von Fristen eine zentrale Rolle, um die Rechte der Mandanten zu schützen und die ordnungsgemäße Bearbeitung von Fällen zu gewährleisten.

Diese Aufgabe wird in der Regel von speziell ausgebildeten Anwaltsfachangestellten durchgeführt und anschließend von einer weiteren Fachkraft überprüft. Es kann bevorzugt sein, dass ein Anwalt selbst keine nachweisbare Endkontrolle vornimmt, um so die Möglichkeit einer Wiedereinsetzung zu bewahren. Fehler in der Fristenberechnung können gravierende Konsequenzen haben, einschließlich der Gefahr von Wiedereinsetzungsfällen, Haftungsfällen und dem Verlust von Rechten, was häufig den Verlust der Vertretung des betroffenen Mandanten zur Folge hat.

Die Fristenberechnung ist ein zeitaufwendiger Prozess, der nicht selten mehrere Stunden eines Arbeitstages beansprucht. Trotz der hohen Bedeutung und des Aufwands gibt es derzeit keine wirksame Lösung auf dem Markt, die die Berechnung von Fristen erleichtert oder automatisiert. Dies stellt Anwaltskanzleien vor Herausforderungen, da sie auf manuelle und fehleranfällige Methoden angewiesen sind, um sicherzustellen, dass alle Fristen korrekt und rechtzeitig eingehalten werden.

Es ist eine Aufgabe der Erfindung, ein dahingehend verbessertes Verfahren und/oder eine Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch ein System gemäß den Merkmalen des Patentanspruchs 14.

Gemäß einem ersten Aspekt wird ein computerimplementiertes Verfahren zum Ermitteln mindestens eines Ausgabewertes vorzugsweise zur Datenverarbeitung in einer Datenbank vorgeschlagen. Das Verfahren weist die folgenden Schritte auf:
- Ermitteln mindestens eines numerischen und/oder textlogikbezogenen Basiswertes aus einer Text- und/oder Bilddatei;
- Ermitteln einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen des mindestens einen Ausgabewertes vorzugsweise zur Datenverarbeitung in der Datenbank.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird ein System zum Ermitteln mindestens eines Ausgabewertes zur Datenverarbeitung in einer Datenbank vorgeschlagen. Das System umfasst mindestens eine Auswerte- und/oder Steuereinrichtung, mindestens die ausgebildet ist, die folgenden Schritte auszuführen:
- Ermitteln mindestens eines numerischen und/oder textlogikbezogenen Basiswertes aus einer Text- und/oder Bilddatei;
- Ermitteln einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen des mindestens einen Ausgabewertes zur Datenverarbeitung in der Datenbank.

Die für das Verfahren gemachten Ausführungen gelten für das System entsprechend. Dabei versteht es sich, dass sprachliche Abwandlungen von verfahrensmäßig formulierten Merkmalen nach sprachüblicher Praxis für das System umformulierbar sind, ohne dass derartige Formulierungen explizit hier aufgeführt werden müssen.

Bei dem "Ermitteln mindestens eines numerischen und/oder textlogikbezogenen Basiswertes aus einer Text- und/oder Bilddatei" werden vorzugsweise die relevanten Basiswerte, die entweder numerischer Natur oder textlogikbezogen sein können, aus Text- und/oder Bilddateien extrahiert. Bei dem "Ermitteln einer Berechnungsbezugsgröße und/oder einer Textlogikbezugsgröße auf Basis des Basiswertes und/oder auf Basis der Text- und/oder Bilddatei durch mindestens ein maschinelles Lernmodell" wird vorzugsweise mittels eines oder mehrerer maschineller Lernmodelle eine Berechnungsbezugsgröße und/oder eine Textlogikbezugsgröße bestimmt, die auf den zuvor ermittelten Basiswerten und/oder den Text- und Bilddateien basieren. Bei dem "Ermitteln des mindestens einen Ausgabewertes durch das mindestens eine maschinelle Lernmodell auf Basis des Basiswertes und/oder der Berechnungsbezugsgröße und/oder der Textlogikbezugsgröße" wird vorzugsweise durch das maschinelle Lernmodell mindestens ein Ausgabewert ermittelt, der auf den Basiswerten, den Berechnungsbezugsgrößen und/oder den Textlogikbezugsgrößen basiert. Bei dem "Bereitstellen des mindestens einen Ausgabewertes zur Datenverarbeitung in der Datenbank" wird der ermittelte Ausgabewert zur weiteren Datenverarbeitung in einer Datenbank zur Datenweiterverarbeitung bereitgestellt. Beispielsweise kann auf Basis des ermittelten Ausgabewertes auch eine weitere physikalische Interaktion, beispielsweise ein Drucken und/oder ein Scannen oder sonstiges erfolgen. Beispielsweise kann auf Basis des mindestens einen Ausgabewertes auch ein Teil eines Fristenbuchs gedruckt werden.

Das Verfahren wird vorzugsweise mittels eines Computersystems implementiert, welches die Verarbeitungsschritte automatisiert durchführt. Die Ermittlung von Basiswerten beschreibt die Extraktion von numerischen und textlogikbezogenen Werten aus Text- und Bilddateien. Das Verfahren wird durch den Einsatz von maschinellen Lernmodellen zur Bestimmung von Berechnungs- und Textlogikbezugsgrößen ausgeführt.

Das Verfahren automatisiert die Ermittlung und Bereitstellung von Ausgabewerten, wodurch die Effizienz und Genauigkeit der Datenverarbeitung erheblich gesteigert wird. Durch den Einsatz von maschinellen Lernmodellen wird die Fehleranfälligkeit, die bei manuellen Berechnungen auftreten kann, deutlich reduziert. Die Automatisierung der Schritte führt zu einer erheblichen Zeiteinsparung, da komplexe Berechnungen und Analysen schneller durchgeführt werden können. Das Verfahren kann leicht auf große Datenmengen angewendet werden, was besonders in datenintensiven Bereichen von Vorteil ist. Die Fähigkeit, sowohl numerische als auch textlogikbezogene Basiswerte zu verarbeiten, ermöglicht eine breite Anwendung des Verfahrens in verschiedenen Anwendungsbereichen.

Die Trainingsdaten für ein maschinelles Lernmodell, das zur Ermittlung von Ausgabewerten zur Datenverarbeitung in einer Datenbank verwendet wird, sind vorzugsweise strukturiert und repräsentativ für die verschiedenen Szenarien, die das maschinelle Modell später bewältigen soll. Diese Trainingsdaten können aus numerischen Basiswerten, textlogikbezogenen Basiswerten und/oder Bilddaten bestehen. Numerische Basiswerte könnten Tabellen mit numerischen Werten wie Messwerten, finanziellen Kennzahlen oder Statistiken umfassen, die als Basiswerte dienen. Textdaten könnten Dokumente oder Textdateien sein, die textlogische Aussagen enthalten, wie z.B. Vertragsklauseln, technische Berichte oder Kundenfeedback. Bilddaten könnten digitalisierte Dokumente, Scans oder Fotografien sein, die relevante Informationen enthalten, die extrahiert werden sollen. Diese Bilddaten könnten auch manuell oder automatisch annotierte Bilder umfassen, die bestimmte Merkmale oder Textlogikbereiche markieren. Die Berechnungsbezugsgrößen und Textlogikbezugsgrößen könnten Referenzwerte umfassen, die vorab berechnet wurden und als Zielwerte dienen, um dem Modell zu helfen, die richtigen Berechnungen zu lernen. Textlogikreferenzen könnten Beispiele für logische Verknüpfungen oder Schlussfolgerungen sein, die aus den Textdaten gezogen werden sollen. Die Ausgabewerte könnten Labels oder Zielwerte umfassen, die das Modell vorhersagen soll, basierend auf den eingegebenen Basiswerten und Bezugsgrößen. Ein Beispieldatensatz für numerische Basiswerte könnte wie folgt aussehen: Eine Textdatei enthält die Aussage "Erhalten am 01.01.2024 mit Frist von 4 Monaten", wobei "01.01.2024" der numerische Basiswert, " 4 Monaten" die Berechnungsbezugsgröße und "Frist" die Textlogikbezugsgröße sein kann. Für textlogikbezogene Basiswerte könnte als ein Beispieldatensatz ein Kaufvertrag die Klausel "Ihr Kauf wurde heute getätigt. Der Käufer hat das Recht, innerhalb von 14 Tagen zu widerrufen" enthalten. Der textlogikbezogene Basiswert könnte dann "heute", der Berechnungsbezugsgröße könnte "14 Tagen", und die Textlogikbezugsgröße "widerrufen" sein. Der Ausgabewert wäre dann beispielsweise "Widerrufsfrist endet in 14 Tage ab heute, nämlich am XX.XX.XXXX". Eine andere Klausel könnte lauten: "Die Lieferung erfolgt spätestens 30 Tage nach Vertragsschluss am 01.01.2024", wobei "01.01.2024" der numerische Basiswert, "30 Tage" die Berechnungsbezugsgröße und "Vertragsschluss" und/oder "Lieferung" die Textlogikbezugsgröße und der erwartete Ausgabewert "Lieferung erfolgt bis zum 31.01.2024" sein kann. Für Bilddaten könnte ein Beispieldatensatz ein Bild enthalten, das eine relevante Information wie eine Zahl zeigt. Der Datenvorbereitungsprozess umfasst vorzugsweise eine Annotation der Daten, das Feature-Engineering zur Extraktion und Transformation der Basiswerte und Bezugsgrößen, die Aufteilung der Daten in Trainings-, Validierungs- und Testdatensätze sowie die Datenbereinigung zur Verbesserung der Datenqualität. Gut kuratierte und umfassende Datensätze sind entscheidend für die Leistungsfähigkeit des maschinellen Lernmodells und ermöglichen es ihm, genaue und zuverlässige Ausgabewerte zu ermitteln.

In einem weiteren Aspekt wird vorgeschlagen, dass das Ermitteln des Basiswertes aus der Text- und/oder Bilddatei durch mindestens einen Bild-Muster-Erkennungs-Algorithmus und/oder durch einen Vektorraumabgleich und/oder durch mehrere voneinander unterschiedliche OCR-Algorithmen, insbesondere parallelisiert und/oder sequenziell, erfolgt.

Die Algorithmen können sowohl parallelisiert als auch sequenziell angewendet werden, um die Genauigkeit und Effizienz der Basiswertermittlung zu erhöhen. Ein Bild-Muster-Erkennungs-Algorithmus identifiziert und extrahiert vorzugsweise relevante Muster und Merkmale aus Bilddateien, während ein Vektorraumabgleich semantische Ähnlichkeiten zwischen Textdaten erkennt, indem er diese in einen multidimensionalen Vektorraum überführt und dort vergleicht. Mehrere voneinander unterschiedliche OCR-Algorithmen, die entweder parallel oder nacheinander arbeiten, ermöglichen die präzise Erkennung und Extraktion von Text aus Bilddateien, indem sie unterschiedliche Techniken und Ansätze nutzen, um die Erkennungsrate zu optimieren. Durch diese Kombination und flexible Anwendung der verschiedenen Algorithmen wird sichergestellt, dass die Basiswerte aus den Text- und Bilddateien zuverlässig und akkurat ermittelt werden können. Die parallele Verarbeitung ermöglicht eine schnellere Analyse großer Datenmengen, während die sequenzielle Anwendung sicherstellt, dass auch komplexere Dokumente gründlich und detailliert ausgewertet werden. Dies führt insgesamt zu einer robusteren und effizienteren Datenverarbeitung innerhalb des vorgeschlagenen Verfahrens.

In einem weiteren Aspekt wird vorgeschlagen, dass der mindestens eine Ausgabewert in der Datenbank dazu verwendet wird, mindestens einen Datenweiterverarbeitungsschritt, vorzugsweise eine automatische Erstellung eines Dokumentes und/oder eine Ausgabe einer akustischen Erinnerung und/oder eine automatische Erstellung eines Kalenders, zu triggern.

Durch die Nutzung des Ausgabewertes wird die Datenbank in die Lage versetzt, weitere automatisierte Prozesse anzustoßen. So kann beispielsweise bei Ermittlung eines bestimmten Ausgabewertes automatisch ein neues Dokument generiert werden, das relevante Informationen enthält und sofort zur Verfügung steht. Alternativ kann eine akustische Erinnerung ausgegeben werden, um Nutzer auf wichtige Ereignisse oder Fristen aufmerksam zu machen. Ebenso kann ein Kalendereintrag automatisch erstellt werden, um sicherzustellen, dass wichtige Termine und Fristen nicht übersehen werden. Diese automatisierten Weiterverarbeitungsschritte erhöhen die Effizienz und Genauigkeit der Arbeitsabläufe erheblich, indem sie manuelle Eingriffe reduzieren und sicherstellen, dass alle relevanten Informationen zeitnah und zuverlässig verarbeitet werden.

In einem weiteren Aspekt wird vorgeschlagen, dass der mindestens eine Ausgabewert zur Datenweiterverarbeitung als ein Barcode oder als ein QR-Code oder Teilinformation eines solchen abgespeichert und/oder auf einem physikalischen Medium, beispielsweise Papier, ausgegeben wird.

Diese Methode ermöglicht eine einfache und effiziente Weiterverarbeitung der Daten, indem die Ausgabewerte in einem maschinenlesbaren Format vorliegen, das schnell und zuverlässig von verschiedenen Geräten und Systemen erfasst und verarbeitet werden kann. Durch die zumindest temporäre Speicherung der Ausgabewerte als Barcode und/oder QR-Code können die Informationen in unterschiedliche Systeme integriert werden, sei es zur Identifikation von Dokumenten, zur Verfolgung von Prozessen oder zur schnellen Informationsübermittlung. Diese Technologie ermöglicht es, die ermittelten Ausgabewerte kompakt und effizient zu speichern, wodurch sichergestellt wird, dass die Daten jederzeit leicht zugänglich und lesbar sind. Dies trägt zu einer verbesserten Datenverwaltung und einer höheren Genauigkeit bei der Weiterverarbeitung bei, da die Möglichkeit manueller Eingabefehler reduziert wird.

In einem weiteren Aspekt wird vorgeschlagen, dass der mindestens eine Ausgabewert eine Vielzahl von Zwischenwerten und/oder Zwischengrößen umfasst.

Durch die Einbeziehung einer Vielzahl von Zwischenwerten und Zwischengrößen wird eine detailliertere und umfassendere Darstellung der Daten ermöglicht. Diese zusätzlichen Werte bieten tiefergehende Einblicke in den Verlauf und die Berechnungen, die zu dem endgültigen Ausgabewert geführt haben. Dies kann besonders nützlich sein, um die Nachvollziehbarkeit und Transparenz der Ergebnisse zu erhöhen, Fehlerquellen zu identifizieren und die Genauigkeit der Datenverarbeitung zu verbessern. Die Zwischengrößen und Zwischenwerte dienen somit als zusätzliche Informationsschichten, die eine fundiertere Analyse und bessere Entscheidungsgrundlage bieten. Durch die detaillierte Aufschlüsselung des Verarbeitungsprozesses wird es möglich, die einzelnen Schritte und deren Auswirkungen genauer zu verstehen und zu kontrollieren.

In einem weiteren Aspekt wird vorgeschlagen, dass der Ausgabewert textuelle und/oder numerische und/oder alpha-numerische und/oder zeitbezogene und/oder datumsbezogene und/oder uhrzeitbezogene und/oder Basiswert-bezogenen Informationen umfasst.

Dies bedeutet, dass der Ausgabewert eine breite Palette von Informationsarten enthalten kann, die für die jeweilige Anwendung relevant sind. Der Ausgabewert kann textuelle Informationen umfassen, wie z.B. Beschreibungen, Kommentare oder Anweisungen. Numerische Informationen könnten Zahlenwerte darstellen, die für Berechnungen oder Messungen relevant sind. Alphanumerische Informationen kombinieren Buchstaben und Zahlen, was nützlich sein kann für Codes oder Identifikationsnummern. Zeitbezogene Informationen könnten Zeitstempel oder Dauerangaben enthalten, während datumsbezogene Informationen spezifische Daten umfassen. Uhrzeitbezogene Informationen beziehen sich auf genaue Zeitangaben. Basiswert-bezogene Informationen schließlich sind direkt mit den ursprünglich ermittelten Basiswerten verknüpft und bieten Kontext oder weiterführende Details zu diesen Werten. Durch die Einbeziehung dieser verschiedenen Informationsarten wird der Ausgabewert vielseitig einsetzbar und kann eine umfassende Grundlage für weiterführende Datenverarbeitungs- und Analyseprozesse bieten. Dies erhöht die Flexibilität und Nützlichkeit der ermittelten Ausgabewerte erheblich und ermöglicht eine präzisere und kontextbezogenere Anwendung in verschiedensten Szenarien.

In einem weiteren Aspekt wird vorgeschlagen, dass die Berechnungsbezugsgröße und/oder die Textlogikbezugsgröße textuelle und/oder numerische und/oder alpha-numerische Informationen umfasst.

Dies bedeutet, dass diese Bezugsgrößen eine Vielzahl unterschiedlicher Informationsarten enthalten können, um verschiedene Berechnungs- und Logikanforderungen zu erfüllen. Die Berechnungsbezugsgröße könnte numerische Informationen enthalten, wie z.B. spezifische Zahlenwerte oder Messgrößen, die als Grundlage für mathematische Berechnungen dienen. Textuelle Informationen könnten Beschreibungen und/oder Anweisungen umfassen, die den Kontext für die Berechnungen liefern. Alphanumerische Informationen könnten Kombinationen aus Buchstaben und Zahlen darstellen, die als Codes oder Kennzeichnungen für bestimmte Parameter oder Kategorien verwendet werden. Die Textlogikbezugsgröße könnte ebenfalls textuelle Informationen beinhalten, die logische Regeln, Bedingungen oder narrative Beschreibungen darstellen. Numerische Informationen in diesem Kontext könnten Zahlenwerte sein, die in logische Aussagen eingebettet sind. Alphanumerische Informationen könnten verwendet werden, um komplexere logische Ausdrücke oder Identifikationscodes darzustellen, die in textbasierten Logiksystemen eine Rolle spielen. Durch die Integration dieser unterschiedlichen Informationsarten in die Berechnungs- und Textlogikbezugsgrößen wird die Flexibilität und Präzision des Verfahrens erhöht. Dies ermöglicht eine detaillierte und kontextsensitive Verarbeitung, die den spezifischen Anforderungen der jeweiligen Anwendung gerecht wird und somit die Genauigkeit und Relevanz der ermittelten Ausgabewerte verbessert.

In einem weiteren Aspekt wird vorgeschlagen, dass das mindestens eine maschinelle Lernmodell auf Basis von Trainingsdaten, umfassend eine Vielzahl von Text- und/oder Bilddateien, vortrainiert ist.

Dies bedeutet, dass das Modell vor seiner eigentlichen Anwendung auf eine große Menge an repräsentativen Daten trainiert wurde, um seine Genauigkeit und Effizienz zu maximieren. Die Trainingsdaten umfassen vorzugsweise eine Vielzahl von Textdateien, die unterschiedliche sprachliche und/oder logische Strukturen umfassen, sowie Bilddateien, die verschiedene visuelle Informationen und Muster repräsentieren. Durch die Verwendung dieser umfangreichen und vielfältigen Datensätze wird das maschinelle Lernmodell in die Lage versetzt, Muster und Zusammenhänge in den Daten zu erkennen und zu lernen. Das Vortraining des Modells auf diesen Trainingsdaten ermöglicht es, dass das Modell ein tiefes Verständnis für die unterschiedlichen Informationsarten und deren Beziehungen zueinander entwickelt. Dies führt zu einer verbesserten Fähigkeit, relevante Basiswerte, Berechnungsbezugsgrößen und Textlogikbezugsgrößen aus neuen, bisher unbekannten Text- und Bilddateien zu extrahieren und genaue Ausgabewerte zu ermitteln. Durch das Vortraining auf einer Vielzahl von Text- und Bilddateien wird sichergestellt, dass das maschinelle Lernmodell robust und vielseitig einsetzbar ist. Es kann effektiv auf verschiedene Datentypen und Anwendungsszenarien reagieren, wodurch die Effizienz und Genauigkeit der Datenverarbeitung erheblich gesteigert werden.

In einem weiteren Aspekt wird vorgeschlagen, dass das mindestens eine maschinelle Lernmodell ein neuronales Netzwerk und/oder ein Hybridmodell und/oder ein Transformer-Modell und/oder einen Bidirectional Encoder Representations from Transformers und/oder einen aktiv lernenden Algorithmus der künstlichen Intelligenz und/oder einen teilüberwachten Algorithmus der künstlichen Intelligenz und/oder einen überwachten Algorithmus der künstlichen Intelligenz und/oder einen Parser aufweist.

Vorliegend werden auch Parser unter dem Begriff "maschinellen Lernmodell" erfasst. Der Begriff "maschinellen Lernmodell" kann vorliegend also allgemein auch als Datenverarbeitungsalgorithmus bzw. Datenverarbeitungseinheit verstanden werden.

Ein Hybridmodell kann einen analytischen Modellanteil sowie einen auf Basis von künstlicher Intelligenz arbeitenden Modellanteil aufweisen. Das maschinelle Lernmodell kann komplexe und neuartige Modelltypen aufweisen. Dazu zählen neuronale Netzwerke, Hybridmodelle, Transformer-Modelle, Bidirectional Encoder Representations from Transformers (BERT), aktiv lernende Algorithmen der künstlichen Intelligenz, teilüberwachte Algorithmen der künstlichen Intelligenz, überwachte Algorithmen der künstlichen Intelligenz sowie Parser. Neuronale Netzwerke sind tiefgehende Lernmodelle, die aus mehreren Schichten von Neuronen bestehen und besonders gut für Mustererkennung und komplexe Aufgaben geeignet sind. Hybridmodelle kombinieren verschiedene maschinelle Lerntechniken, um die Stärken der einzelnen Methoden zu nutzen und die Gesamtleistung zu verbessern. Transformer-Modelle, wie BERT, sind besonders leistungsfähig bei der Verarbeitung und dem Verständnis von natürlichen Sprachdaten. Sie können Kontextinformationen über große Textmengen hinweg erfassen und sind daher ideal für Textanalyse und -verarbeitung. BERT-Modelle sind speziell darauf ausgelegt, bidirektionale Kontexte zu verstehen, was sie besonders nützlich für Aufgaben wie Textklassifikation und Named Entity Recognition macht. Aktiv lernende Algorithmen der künstlichen Intelligenz optimieren kontinuierlich ihre Leistung durch Interaktionen und Rückmeldungen, während teilüberwachte Algorithmen eine Kombination aus überwachten und unüberwachten Lerntechniken nutzen, um aus sowohl gelabelten als auch ungelabelten Daten zu lernen. Überwachte Algorithmen der künstlichen Intelligenz hingegen lernen ausschließlich aus gelabelten Daten und sind besonders effektiv für klare, spezifische Aufgabenstellungen. Ein Parser ist ein weiteres Element, das syntaktische und semantische Analysen von Textdaten ermöglicht. Er zerlegt Texte in ihre Bestandteile und hilft dabei, die Struktur und Bedeutung der Informationen zu verstehen. Durch die Integration dieser verschiedenen Technologien und Algorithmen in das maschinelle Lernmodell wird eine hohe Flexibilität und Leistungsfähigkeit gewährleistet. Dies ermöglicht eine präzise und effiziente Datenverarbeitung, die sich an die spezifischen Anforderungen und Herausforderungen der jeweiligen Anwendung anpassen kann. Ein Parser kann vorzugsweise einen Zustandsautomaten und besonders vorzugsweise zusätzlich einen lexikalischen Scanner aufweisen. Der Scanner kann dazu eingerichtet sein, die Tokenisierung vorzunehmen. Die Tokenisierung erfolgt vorzugsweise auf Wortbasis, die im Gegenzug zu Large-Language-Modellen vorzugsweise einer regulären Grammatik (bspw. Datenformate erkennt) folgt. Der Zustandsautomat ist vorzugsweise dazu eingerichtet, gemäß von Lexikonbegriffen und/oder Embeddings die numerischen und/oder textlogikbezogenen Basiswerte und die Berechnungsbezugsgröße zu ermitteln und deren Bezug lexikalisch herstellt, z. B. ein Verb oder ein anders Wort aus dem Lexikon, das die Berechnungsbezugsgröße und den Basiswert ermittelt.

In einem weiteren Aspekt wird vorgeschlagen, dass das Verfahren ferner aufweist: insbesondere initiales Unterteilen und/oder Zerlegen und/oder Partitionieren der mindestens einen Text- und/oder Bilddatei in mindestens zwei Text- und/oder Bildabschnitte mittels mindestens eines graphischen Verfahrens, insbesondere mittels eines Convolutional Neuronal Networks auf Basis von dateispezifischen Mustern und/oder Objektpositionierungen, wobei das Ermitteln des mindestens einen numerischen und/oder textlogikbezogenen Basiswertes für jeden der mindestens zwei Text- und/oder Bildabschnitte, insbesondere mittels OCR, erfolgt.

Bei den Objektpositionierungen kann es sich beispielsweise um einen Briefkopf, einen Brieffuß, eine Adressbox und/oder um einen anderen Dokumententeil und/oder um einen Stempel handeln. Das CNN analysiert vorzugsweise die Datei und identifiziert charakteristische Muster und Positionen von Objekten, um die Datei effektiv in verschiedene Abschnitte zu unterteilen. Dies ermöglicht eine gezieltere Verarbeitung und Analyse der einzelnen Abschnitte. Für jeden der mindestens zwei Text- und/oder Bildabschnitte wird dann der mindestens eine numerische und/oder textlogikbezogene Basiswert ermittelt, insbesondere durch den Einsatz von Optical Character Recognition (OCR). Durch diese Vorgehensweise wird eine detaillierte und strukturierte Analyse der Text- und Bilddaten ermöglicht. Das initiale Unterteilen der Dateien in Abschnitte verbessert die Genauigkeit der nachfolgenden Verarbeitungsschritte, da spezifische Informationen gezielt aus kleineren, überschaubareren Datenabschnitten extrahiert werden können. Die Verwendung von CNNs für das graphische Verfahren stellt sicher, dass komplexe Muster und Strukturen innerhalb der Dateien erkannt und korrekt segmentiert werden. Die Kombination aus graphischen Verfahren zur Dateiunterteilung und OCR zur Basiswertermittlung in den einzelnen Abschnitten sorgt dafür, dass sowohl die visuelle als auch die inhaltliche Information der Dateien präzise erfasst und verarbeitet werden kann. Dies erhöht die Effizienz und Genauigkeit des gesamten Verfahrens erheblich und ermöglicht eine umfassendere und detailliertere Datenanalyse.

In einem weiteren Aspekt wird vorgeschlagen, dass das Ermitteln des mindestens einen Ausgabewertes durch das mindestens eine maschinelle Lernmodell auf Basis des Basiswertes und/oder der Berechnungsbezugsgröße und/oder der Textlogikbezugsgröße ein Umwandeln von entsprechend als Daten und/oder relative, insbesondere zeitliche, Angaben klassifizierte Teile in numerische Werte und optional ein Verrechnen numerischer Größen umfasst.

Dies bedeutet, dass das maschinelle Lernmodell nicht nur die Basiswerte und Bezugsgrößen analysiert, sondern auch spezifische Teile der Daten, die als zeitliche oder relative Angaben klassifiziert sind, in numerische Werte umwandelt. Zum Beispiel können Datumsangaben oder Zeitspannen in entsprechende numerische Formate konvertiert werden, um eine einheitliche und präzise Weiterverarbeitung zu ermöglichen. Darüber hinaus kann das Modell diese numerischen Werte optional miteinander verrechnen, um komplexere Ausgabewerte zu erzeugen. Dies könnte beispielsweise die Berechnung von Fristen, Zeiträumen oder anderen relevanten numerischen Größen umfassen, die auf den konvertierten Daten basieren. Durch diese Vorgehensweise wird sichergestellt, dass sowohl die zeitlichen als auch die numerischen Aspekte der Daten präzise berücksichtigt und in die Berechnungen einbezogen werden. Dies erhöht die Genauigkeit und Nützlichkeit der ermittelten Ausgabewerte und ermöglicht eine umfassendere und präzisere Datenverarbeitung.

In einem weiteren Aspekt wird vorgeschlagen, dass das mindestens eine maschinelle Lernmodell einen Text- und/oder Bildklassifikator und/oder eine Approximationskompensation aufweist.

Der Text- und/oder Bildklassifikator ist vorzugsweise dafür verantwortlich, die eingehenden Daten in verschiedene Kategorien einzuordnen. Dieser Klassifikator analysiert Text- und Bilddaten, um relevante Muster und Merkmale zu erkennen und die Daten entsprechend zu klassifizieren. Dies ermöglicht eine strukturierte und gezielte Weiterverarbeitung der Daten, da die verschiedenen Kategorien spezifischen Verarbeitungsprozessen zugeordnet werden können. Die Approximationskompensation dient vorzugsweise dazu, Ungenauigkeiten und Abweichungen, die während der Datenverarbeitung auftreten können, zu minimieren. Dieser Mechanismus stellt sicher, dass die Ergebnisse des maschinellen Lernmodells trotz möglicher Annäherungen und Vereinfachungen präzise und zuverlässig bleiben. Durch die Integration eines Text- und/oder Bildklassifikators sowie einer Approximationskompensation wird die Leistungsfähigkeit des maschinellen Lernmodells erheblich gesteigert. Der Klassifikator sorgt für eine effektive Kategorisierung der Daten, während die Approximationskompensation die Genauigkeit der Ausgabewerte gewährleistet, indem sie potenzielle Fehler und Ungenauigkeiten ausgleicht. Diese Merkmale tragen dazu bei, dass das Verfahren insgesamt robuster und zuverlässiger wird und präzise Ergebnisse liefert.

In einem weiteren Aspekt wird vorgeschlagen, dass die Trainingsdaten eine Vielzahl von gelabelten Text- und/oder Bilddateien und/oder augmentierte, insbesondere gelabelte Text- und/oder Bilddateien aufweisen.

Die gelabelten Text- und Bilddateien umfassen vorzugsweise annotierte Informationen, die als Referenz dienen, um das maschinelle Lernmodell zu trainieren. Diese Labels ermöglichen es dem Modell, spezifische Merkmale und Muster in den Daten zu erkennen und zu lernen, wie bestimmte Kategorien oder Werte zugeordnet werden. Durch die Verwendung dieser gelabelten Daten kann das Modell genaue Vorhersagen und Klassifikationen treffen. Darüber hinaus können vorzugsweise augmentierte Text- und/oder Bilddateien verwendet werden, um die Vielfalt und Robustheit der Trainingsdaten zu erhöhen. Augmentierungstechniken können dazu verwendet werden, die vorhandenen Daten durch Variationen zu erweitern, wie z.B. durch Veränderung der Perspektive, Hinzufügen von Rauschen oder andere Modifikationen. Dies hilft dem Modell, widerstandsfähiger gegen verschiedene Formen von Eingabedaten zu werden und verbessert seine Fähigkeit, in realen Anwendungsszenarien zu generalisieren. Durch die Integration sowohl gelabelter als auch augmentierter gelabelter Daten in den Trainingsprozess wird die Leistungsfähigkeit des maschinellen Lernmodells erheblich gesteigert. Das Modell wird in der Lage sein, präzise und robuste Ausgabewerte zu liefern, da es auf einer breiten und vielfältigen Datenbasis trainiert wurde, die verschiedene Szenarien und Variationen abdeckt.

In einem weiteren Aspekt wird vorgeschlagen, dass das Ermitteln der mindestens einen Berechnungsbezugsgröße und/oder der mindestens einen Textlogikbezugsgröße auf Basis des Basiswertes und/oder auf Basis der Text- und/oder Bilddatei durch mehrere voneinander unabhängige maschinelle Lernmodelle erfolgt;
das Verfahren ferner umfassend:
Überprüfen und/oder Abgleichen der durch die mehreren maschinellen Lernmodelle ermittelte Mehrzahl von Berechnungsbezugsgrößen und/oder Textlogikbezugsgrößen zur, insbesondere internen, Plausibilitätsprüfung; und
insbesondere wenn eine Abweichung zwischen den Berechnungsbezugsgrößen und/oder Textlogikbezugsgrößen feststellbar ist, erneutes Ermitteln der Berechnungsbezugsgrößen und/oder Textlogikbezugsgrößen.

Durch die Verwendung mehrerer voneinander unabhängiger maschineller Lernmodelle wird sichergestellt, dass die Berechnungs- und Textlogikbezugsgrößen aus verschiedenen Perspektiven und mit unterschiedlichen Ansätzen ermittelt werden. Diese Diversität in der Modellnutzung erhöht die Robustheit und Genauigkeit der Ergebnisse, da verschiedene Modelle unterschiedliche Aspekte der Daten erfassen und analysieren können. Das zusätzliche Überprüfen und/oder Abgleichen der Ergebnisse dient als Plausibilitätsprüfung, um die Konsistenz und Zuverlässigkeit der ermittelten Größen sicherzustellen. Wenn dabei Abweichungen festgestellt werden, signalisiert dies potenzielle Ungenauigkeiten oder Fehler in der ersten Ermittlung. In solchen Fällen wird eine erneute Ermittlung der Bezugsgrößen initiiert, um die Genauigkeit zu erhöhen und sicherzustellen, dass die endgültigen Ausgabewerte präzise und verlässlich sind.

In einem weiteren Aspekt wird vorgeschlagen, dass das mindestens eine maschinelle Lernmodell ein online-Modell und/oder ein offline-Modell aufweist.

Ein Online-Modell ist vorzugsweise darauf ausgelegt, in Echtzeit auf neue Daten zu reagieren und kontinuierlich zu lernen. Es passt seine Parameter dynamisch an, basierend auf den neuesten verfügbaren Informationen. Dies ermöglicht vorzugsweise eine schnelle Anpassung an veränderte Datenmuster und verbessert die Reaktionsfähigkeit des Systems, wodurch aktuelle und relevante Ergebnisse in Echtzeit bereitgestellt werden können. Ein Offline-Modell wird vorzugsweise auf einer vordefinierten Menge an Trainingsdaten trainiert und seine Parameter bleiben nach dem Training statisch. Dieses Modell wird in der Regel in regelmäßigen Abständen mit neuen Daten aktualisiert, jedoch nicht in Echtzeit. Offline-Modelle sind vorzugsweise robuster und weniger anfällig für kurzfristige Schwankungen oder Ausreißer in den Daten, da sie auf umfassenden und sorgfältig kuratierten Datensätzen basieren. Durch die Kombination eines Online-Modells und eines Offline-Modells im maschinellen Lernverfahren wird vorzugsweise eine Balance zwischen Aktualität und Stabilität erreicht. Das Online-Modell gewährleistet, dass das System stets auf dem neuesten Stand ist und sich schnell an neue Informationen anpasst, während das Offline-Modell für Stabilität und Zuverlässigkeit sorgt, indem es auf einer soliden Datenbasis trainiert wurde. Diese duale Modellarchitektur verbessert die Gesamteffizienz und Genauigkeit des Verfahrens erheblich.

In einem weiteren Aspekt umfasst das Verfahren eine dynamische Anpassung der Rechenlastverteilung auf mehrere Recheneinheiten in Abhängigkeit einer im Dokument ermittelten Fristenpriorität. Hierdurch kann das System die Verarbeitungskapazitäten gezielt auf besonders dringliche Inhalte konzentrieren, was insbesondere in verteilten oder ressourcenlimitierten Umgebungen wie Cloud-basierten Kanzleilösungen einen erheblichen technischen Vorteil bietet. Die Reaktion auf dokumenteninhärente Prioritätsinformationen stellt eine technische Steuerungsmaßnahme dar, welche die Systemarchitektur beeinflusst und über eine bloße Datenverarbeitung hinausgeht.

In einem weiteren Aspekt umfasst das Verfahren eine automatische Segmentierung der Eingabedaten in Fristenrelevanzklassen mittels eines semisupervidierten Lernverfahrens. Dieses Merkmal erlaubt die strukturierte Vorverarbeitung heterogener Dokumente durch intelligente Klassifikation und fokussiert die nachfolgenden Verarbeitungsschritte auf tatsächlich fristenrelevante Inhalte. Dies führt zu einer signifikanten Effizienzsteigerung im Datenverarbeitungsprozess und stellt die Lösung eines konkreten technischen Problems im Zusammenhang mit der Informationsselektion dar.

In einem weiteren Aspekt ist das maschinelle Lernmodell konfiguriert, die Unsicherheiten in der Fristenberechnung durch Ausgabe eines Konfidenzintervalls oder einer Wahrscheinlichkeitsverteilung über mögliche Ausgabewerte anzugeben. Hierdurch wird eine technische Transparenz und Plausibilitätskontrolle der Modellausgabe erreicht. Diese Erweiterung erlaubt dem System, kritische Werte kenntlich zu machen und gegebenenfalls adaptive Verarbeitungsstrategien oder manuelle Prüfprozesse einzuleiten, was die technische Vertrauenswürdigkeit des Systems erhöht.

In einem weiteren Aspekt umfasst das Verfahren eine automatische Überprüfung der Konsistenz der extrahierten Basiswerte durch Vergleich mit einem lokalen Zeitregelwerk, das in maschinenlesbarer Form gespeichert ist. Dieses Regelwerk enthält beispielsweise gesetzliche oder organisatorische Vorgaben zur Fristenberechnung und ermöglicht eine automatisierte Validierung der durch das maschinelle Lernmodell bestimmten Ausgabewerte. Dies trägt zur Vermeidung systematischer Fehler und zur Verbesserung der technischen Integrität der Datenverarbeitung bei.

In einem weiteren Aspekt umfasst das Verfahren eine Verschlüsselung der extrahierten und bereitgestellten Ausgabewerte gemäß einem symmetrischen oder asymmetrischen Kryptoverfahren zur datenschutzkonformen Übertragung. Durch diese technische Maßnahme wird sichergestellt, dass vertrauliche Fristdaten auch in externen oder verteilten Verarbeitungsszenarien abgesichert übermittelt werden können. Das Merkmal adressiert damit ein konkretes technisches Problem im Bereich der sicheren Datenübertragung und stellt eine Erweiterung der technischen Schutzebene des Verfahrens dar.

In einem weiteren Aspekt erfolgt eine automatische Visualisierung der extrahierten Ausgabewerte und zugehörigen Bezugsgrößen in einer interaktiven Benutzeroberfläche, wobei die Visualisierung auf einer lokal eingebetteten Webkomponente basiert. Diese Form der Darstellung ermöglicht es dem Nutzer, die durch das System ermittelten Ergebnisse zu überprüfen und bei Bedarf manuell zu korrigieren. Die lokale Einbettung der grafischen Benutzeroberfläche stellt sicher, dass die Interaktion unabhängig von externen Servern erfolgt und erfüllt somit auch Anforderungen an Sicherheit und Verfügbarkeit. Die technische Wirkung dieses Merkmals liegt in der Verbesserung der menschlichen Nutzbarkeit und Fehlerrobustheit des Gesamtsystems.

Dem Verfahren liegt eine strukturierte Modellarchitektur und der Datenverarbeitungspipeline zugrunde. So ist vorgesehen, dass die Extraktion der Basiswerte aus der Text- und/oder Bilddatei mittels einer Kombination aus OCR-Verfahren, Texterkennung mittels Transformer-basierten Sprachmodellen (z. B. BERT oder GPT) und optionaler Layout-Analyse mittels Convolutional Neural Networks (CNNs) erfolgt. Die so ermittelten Basiswerte - wie etwa Datumsangaben, Schlüsselwörter, Ereignisbezeichnungen oder Kontextformulierungen - werden in standardisierte Zwischenformate wie JSON-Objekte überführt. Anschließend wird durch ein separiertes, auf sequenzieller Textklassifikation trainiertes Modell (beispielsweise ein LSTM-Netzwerk oder ein Fine-Tuning eines Transformer-Modells) eine Berechnungsbezugsgröße oder Textlogikbezugsgröße ermittelt. Diese gibt beispielsweise an, ob es sich um eine Fristbeginn- oder Fristendeklaration handelt oder ob bestimmte semantische Ausdrücke (wie "nach Eingang", "ab Vertragsschluss", "binnen 14 Tagen") auf eine logikbezogene Verarbeitung hinweisen. Die Umwandlung in einen Ausgabewert erfolgt durch eine numerische Fristberechnung unter Berücksichtigung des ermittelten Bezugstyps, wobei auch eine Konvertierung relativer Zeitangaben (z. B. "heute", "nächste Woche", "30 Tage danach") in absolute Kalendertage vorgesehen ist. Zur Sicherstellung der Nachvollziehbarkeit enthält das System ein Protokollierungsmodul, das sämtliche Zwischenschritte samt Zeitstempel und Rechenweg dokumentiert.

In einem weiteren Aspekt umfasst das Verfahren eine adaptive Speicher- und Lastausgleichslogik zur Optimierung der Echtzeitverarbeitung der Text- und/oder Bilddateien, wobei die Verarbeitung der Datenströme durch ein Thread-Management-Modul gesteuert wird, das auf die momentane Auslastung der Datenverarbeitungseinrichtung reagiert. Dieses Modul weist vorzugsweise jedem eingehenden Dokumentenpaket auf Basis seiner geschätzten Komplexität (z. B. Anzahl Tokens, Strukturmerkmale, Bildauflösung) eine geeignete Prioritätsklasse zu, wodurch die Dokumentverarbeitung dynamisch an den Zustand der Infrastruktur angepasst wird. Der technische Vorteil besteht in einer verbesserten Ressourcenausnutzung und Reaktionsfähigkeit des Gesamtsystems auch unter hoher Auslastung, was insbesondere für serverbasierte oder cloudbasierte Anwendungen von Relevanz ist.

In einem weiteren Aspekt ist vorgesehen, dass das Verfahren eine automatisch konfigurierte, hardwareoptimierte Inferenzpipeline verwendet, bei der die jeweils eingesetzten maschinellen Lernmodelle auf die Zielarchitektur (CPU, GPU, TPU) abgestimmt werden. Die Auswahl der Inferenzumgebung erfolgt dabei vorzugsweise automatisiert durch ein Performance-Matching-Modul, das auf Benchmarking-Daten basiert und den optimalen Bereitstellungspfad für das jeweilige Modell auswählt. Damit wird erreicht, dass die maschinellen Lernmodelle nicht nur softwareseitig, sondern auch hardwareseitig angepasst zum Einsatz gelangen. Dies stellt eine technische Maßnahme dar, die direkt auf die effektive Nutzung technischer Gegebenheiten der Datenverarbeitungsanlage abstellt und damit zur Technizität beiträgt.

In einem weiteren Aspekt wird ein hybrider Datenverarbeitungspfad vorgeschlagen, bei dem strukturierte Metadaten (z. B. Dateinamen, Kopfzeilen, XML-Tags) parallel zu unstrukturierten Inhalten (z. B. Fließtext, gescannte Bilder) analysiert werden, wobei ein speziell trainiertes Regelwerk zur Priorisierung von kontextrelevanten Datenkombinationen eingesetzt wird. Diese duale Analyse sorgt für eine robuste Interpretation semantischer Inhalte über verschiedene Formate hinweg und ist geeignet, Fehler in der Interpretation einzelner Quellen durch konsistenzbasierte Korrekturmechanismen abzufedern. Der technische Vorteil liegt in der verbesserten Fehlertoleranz und Verlässlichkeit der automatisierten Fristerkennung und -verarbeitung.

In einem weiteren Aspekt umfasst das Verfahren eine tokenbasierte Zugriffskontrolle für jede einzelne Verarbeitungsinstanz des Systems, wodurch sichergestellt ist, dass jede automatische Berechnung und jeder Zugriff auf Daten auditierbar und rückverfolgbar ist. Die Tokens werden kryptographisch gesichert und enthalten Zeitstempel sowie Verweise auf Modellversionen, wodurch eine sichere und nachvollziehbare Prozesskontrolle ermöglicht wird. Der technische Beitrag liegt hier in der Absicherung und Transparenz der datengestützten Berechnungen in dokumentensensiblen Infrastrukturen (z. B. Kanzleisysteme, Compliance-Software).

In einem weiteren Aspekt ist die Erfindung so ausgestaltet, dass die OCR- und Textanalysemodule modulartig auswechselbar sind und über standardisierte Schnittstellen (z. B. ONNX, REST-API) angebunden werden. Dies erlaubt die anwendungsfallspezifische Konfiguration der Pipeline durch technische Administratoren oder Systementwickler, ohne dass Eingriffe in den Kerncode erforderlich sind. Die Modularität in Verbindung mit einer dynamischen Modellverwaltung erlaubt es, je nach Datenquelle oder Sprache das jeweils effizienteste Analysemodell einzusetzen. Der technische Effekt liegt in der verbesserten Flexibilität und Wartbarkeit des Systems bei gleichzeitiger Wahrung der Interoperabilität.

In einem weiteren Aspekt ist ein Computerprogramm mit Programmcode beansprucht, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

In einem weiteren Aspekt ist ein computerlesbarer Datenträger mit Programmcode eines Computerprogramms vorgeschlagen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels des vorliegenden Verfahrens.
- Fig. 2: zeigt eine schematische Darstellung einer beispielhaften Text- und/oder Bilddatei.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

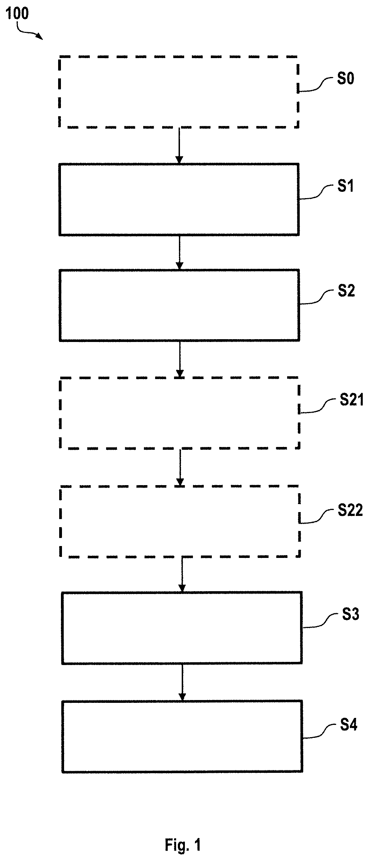

Fig. 1 zeigt ein schematisches Flussdiagramm eines computerimplementierten Verfahrens zum Ermitteln mindestens eines Ausgabewertes zur Datenverarbeitung in einer Datenbank.

Das Verfahren kann in einer beliebigen Ausführungsform zumindest teilweise durch ein System 100 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann das System 100 eine Speichereinrichtung und/oder eine Ausgabeeinrichtung und/oder eine Anzeigeeinrichtung und/oder eine Eingabeeinrichtung umfassen.

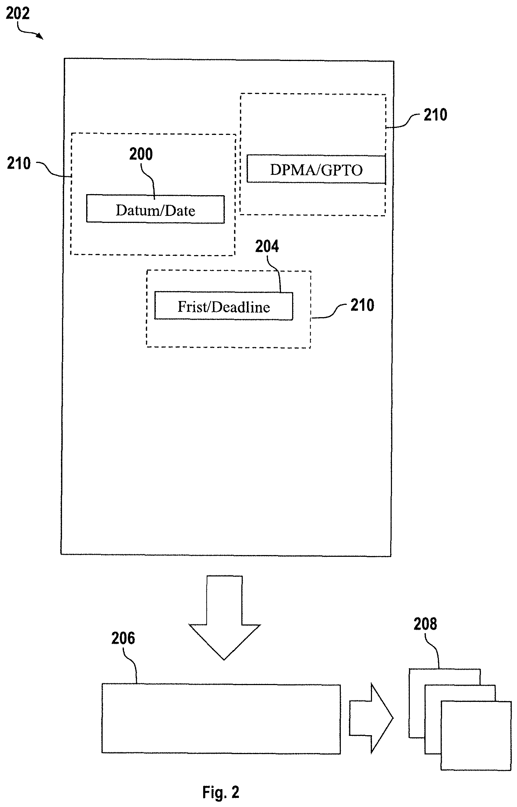

Das computerimplementierte Verfahren umfasst mindestens die folgenden Schritte und wird auch unter Bezugnahme auf Fig. 2 erläutert.

In einem Schritt S1 erfolgt ein Ermitteln mindestens eines numerischen und/oder textlogikbezogenen Basiswertes 200 aus einer Text- und/oder Bilddatei 202.

In einem Schritt S2 erfolgt ein Ermitteln einer Berechnungsbezugsgröße und/oder einer Textlogikbezugsgröße 204 auf Basis des Basiswertes 200 und/oder auf Basis der Text- und/oder Bilddatei 202 durch mindestens ein maschinelles Lernmodell.

In einem Schritt S3 erfolgt ein Ermitteln des mindestens einen Ausgabewertes 206 durch das mindestens eine maschinelle Lernmodell auf Basis des Basiswertes 200 und/oder der Berechnungsbezugsgröße und/oder der Textlogikbezugsgröße 204.

In einem Schritt S4 erfolgt ein Bereitstellen des mindestens einen Ausgabewertes 206 zur Datenverarbeitung in der Datenbank 208.

Optional kann das Verfahren in einem Schritt S0 ein insbesondere initiales Unterteilen und/oder Zerlegen und/oder Partitionieren der mindestens einen Text- und/oder Bilddatei 202 in mindestens zwei Text- und/oder Bildabschnitte 210 mittels mindestens eines graphischen Verfahrens, insbesondere mittels eines Convolutional Neuronal Networks auf Basis von dateispezifischen Mustern und/oder Objektpositionierungen aufweisen. Das Ermitteln S1 des mindestens einen numerischen und/oder textlogikbezogenen Basiswertes 200 erfolgt dabei vorzugsweise für jeden der mindestens zwei Text- und/oder Bildabschnitte 210, insbesondere mittels OCR.

Optional kann das Verfahren ferner in einem Schritt S21 ein Überprüfen und/oder Abgleichen der durch die mehreren maschinellen Lernmodelle ermittelte Mehrzahl von Berechnungsbezugsgrößen und/oder Textlogikbezugsgrößen 204 zur, insbesondere internen, Plausibilitätsprüfung aufweisen.

Optional kann das Verfahren ferner in einem Schritt S22, insbesondere wenn eine Abweichung zwischen den Berechnungsbezugsgrößen und/oder Textlogikbezugsgrößen 204 feststellbar ist, ein erneutes Ermitteln der Berechnungsbezugsgrößen und/oder Textlogikbezugsgrößen 204 aufweisen.

### Bezugszeichenliste

- 200: Basiswert
- 202: Basis der Text- und/oder Bilddatei
- 204: Berechnungsbezugsgröße und/oder einer Textlogikbezugsgröße
- 206: Ausgabewert
- 208: Datenbank
- 210: Text- und/oder Bildabschnitt

## Patentansprüche

1. Computerimplementiertes Verfahren zum Ermitteln mindestens eines Ausgabewertes vorzugsweise zur Datenverarbeitung in einer Datenbank, aufweisend die Schritte:
- Ermitteln (S1) mindestens eines numerischen und/oder textlogikbezogenen Basiswertes aus einer Text- und/oder Bilddatei;
- Ermitteln (S2) einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln (S3) des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen (S4) des mindestens einen Ausgabewertes vorzugsweise zur Datenverarbeitung in der Datenbank.

2. Verfahren nach Anspruch 1, wobei das Ermitteln (S1) des Basiswertes aus der Text- und/oder Bilddatei durch mindestens einen Bild-Muster-Erkennungs-Algorithmus und/oder durch einen Vektorraumabgleich und/oder durch mehrere voneinander unterschiedliche OCR-Algorithmen, insbesondere parallelisiert und/oder sequenziell, erfolgt.

3. Verfahren nach Anspruch 1 oder 2, wobei der mindestens eine Ausgabewert in der Datenbank dazu verwendet wird, mindestens einen Datenweiterverarbeitungsschritt, vorzugsweise eine automatische Erstellung eines Dokumentes und/oder eine Ausgabe einer akustischen Erinnerung und/oder eine automatische Erstellung eines Kalenders, zu triggern.

4. Verfahren nach einem der vorherigen Ansprüche, wobei der mindestens eine Ausgabewert zur Datenweiterverarbeitung als ein Barcode oder als ein QR-Code abgespeichert wird.

5. Verfahren nach einem der vorherigen Ansprüche, wobei eine Rückkopplungsschleife vorgesehen ist, bei der in der Datenbank gespeicherte Ausgabewerte, insbesondere regelmäßig oder intervallweise, mit späteren Referenzdaten abgeglichen werden, um auf Basis erkannter Abweichungen eine Nachjustierung von Modellparametern des mindestens einen maschinellen Lernmodells durch automatische Reinitialisierung eines Feintuningschritts auszulösen.

6. Verfahren nach einem der vorherigen Ansprüche, wobei der Ausgabewert textuelle und/oder numerische und/oder alpha-numerische und/oder zeitbezogene und/oder datumsbezogene und/oder uhrzeitbezogene und/oder Basiswert-bezogenen Informationen umfasst.

7. Verfahren nach einem der vorherigen Ansprüche, wobei die Berechnungsbezugsgröße und/oder die Textlogikbezugsgröße textuelle und/oder numerische und/oder alpha-numerische Informationen umfasst.

8. Verfahren nach einem der vorherigen Ansprüche, wobei die Verarbeitung der Text- und/oder Bilddateien durch ein Thread-Management-Modul gesteuert wird, das auf Grundlage einer Bewertung einer Komplexität eines jeweiligen Datenpakets der Text- und/oder Bilddatei eine Prioritätsklasse zuweist und eine dynamische Lastverteilung zur Echtzeitverarbeitung vornimmt.

9. Verfahren nach einem der vorherigen Ansprüche, wobei das mindestens eine maschinelle Lernmodell ein neuronales Netzwerk und/oder ein Hybridmodell und/oder ein Transformer-Modell und/oder einen Bidirectional Encoder Representations from Transformers und/oder einen aktiv lernenden Algorithmus der künstlichen Intelligenz und/oder einen teilüberwachten Algorithmus der künstlichen Intelligenz und/oder einen überwachten Algorithmus der künstlichen Intelligenz und/oder einen Parser aufweist.

10. Verfahren nach einem der vorherigen Ansprüche, wobei das Verfahren ferner aufweist:
insbesondere initiales Unterteilen und/oder Zerlegen und/oder Partitionieren (S0) der mindestens einen Text- und/oder Bilddatei in mindestens zwei Text- und/oder Bildabschnitte mittels mindestens eines graphischen Verfahrens, insbesondere mittels eines Convolutional Neuronal Networks auf Basis von dateispezifischen Mustern und/oder Objektpositionierungen,
wobei das Ermitteln (S1) des mindestens einen numerischen und/oder textlogikbezogenen Basiswertes für jeden der mindestens zwei Text- und/oder Bildabschnitte, insbesondere mittels OCR, erfolgt.

11. Verfahren nach einem der vorherigen Ansprüche, wobei das Ermitteln (S4) des mindestens einen Ausgabewertes durch das mindestens eine maschinelle Lernmodell auf Basis des Basiswertes und/oder der Berechnungsbezugsgröße und/oder der Textlogikbezugsgröße ein Umwandeln von entsprechend als Daten und/oder relative, insbesondere zeitliche, Angaben klassifizierte Teile in numerische Werte und optional ein Verrechnen numerischer Größen umfasst.

12. Verfahren nach einem der vorherigen Ansprüche, wobei das mindestens eine maschinelle Lernmodell automatisiert auf eine hardwareoptimierte Inferenzpipeline abgestimmt wird, wobei ein Performance-Matching-Modul auf Basis von Benchmarkdaten den für die jeweilige Hardwarearchitektur (effizientesten Bereitstellungspfad auswählt.

13. Verfahren nach Anspruch 8, wobei die Trainingsdaten eine Vielzahl von gelabelten Text- und/oder Bilddateien und/oder augmentierte, insbesondere gelabelte Text- und/oder Bilddateien aufweisen.

14. Verfahren nach einem der vorherigen Ansprüche, wobei das Ermitteln (S2) der mindestens einen Berechnungsbezugsgröße und/oder der mindestens einen Textlogikbezugsgröße auf Basis des Basiswertes und/oder auf Basis der Text- und/oder Bilddatei durch mehrere voneinander unabhängige maschinelle Lernmodelle erfolgt;
das Verfahren ferner umfassend:
Überprüfen und/oder Abgleichen (S21) der durch die mehreren maschinellen Lernmodelle ermittelte Mehrzahl von Berechnungsbezugsgrößen und/oder Textlogikbezugsgrö-βen zur, insbesondere internen, Plausibilitätsprüfung; und
insbesondere wenn eine Abweichung zwischen den Berechnungsbezugsgrößen und/oder Textlogikbezugsgrößen feststellbar ist, erneutes Ermitteln (S22) der Berechnungsbezugsgrößen und/oder Textlogikbezugsgrößen.

15. System (100) zum Ermitteln mindestens eines Ausgabewertes zur Datenverarbeitung in einer Datenbank, das System (100) umfassend mindestens eine Auswerte- und/oder Steuereinrichtung, die ausgebildet ist, die folgenden Schritte auszuführen:
- Ermitteln mindestens eines numerischen und/oder textlogikbezogenen Basiswertes aus einer Text- und/oder Bilddatei;
- Ermitteln einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen des mindestens einen Ausgabewertes zur Datenverarbeitung in der Datenbank.

## Geänderte Patentansprüche

### Geänderte Patentansprüche gemäss Regel 137(2) EPÜ.

1. Computerimplementiertes Verfahren zum Ermitteln mindestens eines Ausgabewertes vorzugsweise zur Datenverarbeitung in einer Datenbank, aufweisend die Schritte:
- Ermitteln (S1) mindestens eines numerischen und/oder textlogikbezogenen Basiswertes aus einer Text- und/oder Bilddatei parallelisiert durch mehrere voneinander unterschiedliche OCR-Algorithmen;
- Ermitteln (S2) einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln (S3) des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen (S4) des mindestens einen Ausgabewertes vorzugsweise zur Datenverarbeitung in der Datenbank,
wobei die Verarbeitung der Text- und/oder Bilddateien durch ein Thread-Management-Modul mit dynamischer Lastverteilung gesteuert wird, das auf Grundlage einer Bewertung der Komplexität eines jeweiligen Datenpakets der Text- und/oder Bilddatei eine Prioritätsklasse zuweist und eine dynamische Lastverteilung zur Echtzeitverarbeitung vornimmt.

2. Verfahren nach Anspruch 1, wobei der mindestens eine Ausgabewert in der Datenbank dazu verwendet wird, mindestens einen Datenweiterverarbeitungsschritt, vorzugsweise eine automatische Erstellung eines Dokumentes und/oder eine Ausgabe einer akustischen Erinnerung und/oder eine automatische Erstellung eines Kalenders, zu triggern.

3. Verfahren nach einem der vorherigen Ansprüche, wobei der mindestens eine Ausgabewert zur Datenweiterverarbeitung als ein Barcode oder als ein QR-Code abgespeichert wird.

4. Verfahren nach einem der vorherigen Ansprüche, wobei eine Rückkopplungsschleife vorgesehen ist, bei der in der Datenbank gespeicherte Ausgabewerte, insbesondere regelmäßig oder intervallweise, mit späteren Referenzdaten abgeglichen werden, um auf Basis erkannter Abweichungen eine Nachjustierung von Modellparametern des mindestens einen maschinellen Lernmodells durch automatische Reinitialisierung eines Feintuningschritts auszulösen.

5. Verfahren nach einem der vorherigen Ansprüche, wobei der Ausgabewert textuelle und/oder numerische und/oder alpha-numerische und/oder zeitbezogene und/oder datumsbezogene und/oder uhrzeitbezogene und/oder Basiswert-bezogenen Informationen umfasst.

6. Verfahren nach einem der vorherigen Ansprüche, wobei die Berechnungsbezugsgröße und/oder die Textlogikbezugsgröße textuelle und/oder numerische und/oder alpha-numerische Informationen umfasst.

7. Verfahren nach einem der vorherigen Ansprüche, wobei das mindestens eine maschinelle Lernmodell ein neuronales Netzwerk und/oder ein Hybridmodell und/oder ein Transformer-Modell und/oder einen Bidirectional Encoder Representations from Transformers und/oder einen aktiv lernenden Algorithmus der künstlichen Intelligenz und/oder einen teilüberwachten Algorithmus der künstlichen Intelligenz und/oder einen überwachten Algorithmus der künstlichen Intelligenz und/oder einen Parser aufweist.

8. Verfahren nach einem der vorherigen Ansprüche, wobei das Verfahren ferner aufweist:
insbesondere initiales Unterteilen und/oder Zerlegen und/oder Partitionieren (S0) der mindestens einen Text- und/oder Bilddatei in mindestens zwei Text- und/oder Bildabschnitte mittels mindestens eines graphischen Verfahrens, insbesondere mittels eines Convolutional Neuronal Networks auf Basis von dateispezifischen Mustern und/oder Objektpositionierungen,
wobei das Ermitteln (S1) des mindestens einen numerischen und/oder textlogikbezogenen Basiswertes für jeden der mindestens zwei Text- und/oder Bildabschnitte, insbesondere mittels OCR, erfolgt.

9. Verfahren nach einem der vorherigen Ansprüche, wobei das Ermitteln (S4) des mindestens einen Ausgabewertes durch das mindestens eine maschinelle Lernmodell auf Basis des Basiswertes und/oder der Berechnungsbezugsgröße und/oder der Textlogikbezugsgröße ein Umwandeln von entsprechend als Daten und/oder relative, insbesondere zeitliche, Angaben klassifizierte Teile in numerische Werte und optional ein Verrechnen numerischer Größen umfasst.

10. Verfahren nach einem der vorherigen Ansprüche, wobei das mindestens eine maschinelle Lernmodell automatisiert auf eine hardwareoptimierte Inferenzpipeline abgestimmt wird, wobei ein Performance-Matching-Modul auf Basis von Benchmarkdaten den für die jeweilige Hardwarearchitektur (effizientesten Bereitstellungspfad auswählt.

11. Verfahren nach Anspruch 6, wobei die Trainingsdaten eine Vielzahl von gelabelten Text- und/oder Bilddateien und/oder augmentierte, insbesondere gelabelte Text- und/oder Bilddateien aufweisen.

12. Verfahren nach einem der vorherigen Ansprüche, wobei das Ermitteln (S2) der mindestens einen Berechnungsbezugsgröße und/oder der mindestens einen Textlogikbezugsgröße auf Basis des Basiswertes und/oder auf Basis der Text- und/oder Bilddatei durch mehrere voneinander unabhängige maschinelle Lernmodelle erfolgt;
das Verfahren ferner umfassend:
Überprüfen und/oder Abgleichen (S21) der durch die mehreren maschinellen Lernmodelle ermittelte Mehrzahl von Berechnungsbezugsgrößen und/oder Textlogikbezugsgrößen zur, insbesondere internen, Plausibilitätsprüfung; und
insbesondere wenn eine Abweichung zwischen den Berechnungsbezugsgrößen und/oder Textlogikbezugsgrößen feststellbar ist, erneutes Ermitteln (S22) der Berechnungsbezugsgrößen und/oder Textlogikbezugsgrößen.

13. System (100) zum Ermitteln mindestens eines Ausgabewertes zur Datenverarbeitung in einer Datenbank, das System (100) umfassend mindestens eine Auswerte- und/oder Steuereinrichtung, die ausgebildet ist, die folgenden Schritte auszuführen:
- Ermitteln mindestens eines numerischen und/oder textlogikbezogenen Basiswertes aus einer Text- und/oder Bilddatei parallelisiert durch mehrere voneinander unterschiedliche OCR-Algorithmen;
- Ermitteln einer Berechnungsbezugsgröße und/oder einer Textlogikbezugsgröße auf Basis des Basiswertes und/oder auf Basis der Text- und/oder Bilddatei durch mindestens ein maschinelles Lernmodell;
- Ermitteln des mindestens einen Ausgabewertes durch das mindestens eine maschinelle Lernmodell auf Basis des Basiswertes und/oder der Berechnungsbezugsgröße und/oder der Textlogikbezugsgröße; und
- Bereitstellen des mindestens einen Ausgabewertes zur Datenverarbeitung in der Datenbank, wobei die Verarbeitung der Text- und/oder Bilddateien durch ein Thread-Management-Modul mit dynamischer Lastverteilung gesteuert wird, das auf Grundlage einer Bewertung der Komplexität eines jeweiligen Datenpakets der Text- und/oder Bilddatei eine Prioritätsklasse zuweist und eine dynamische Lastverteilung zur Echtzeitverarbeitung vornimmt.
